# EUROPEAN PATENT APPLICATION

(11) **EP 4 609 697 A1**
(43) Date of publication of application: **03.09.2025**
(21) Application number: 24189700.8
(22) Date of filing: 19.07.2024
(51) Int. Cl.: A01D 46/26

(54) **A PINE CONE HARVESTING IMPLEMENT**

(30) Priority: 28.02.2024 PT 2024119283
(71) Applicant: Fravizel - Equipamentos Metalomecânicos, S.A., 2025-999 Alcanede (PT)
(72) Inventor: VICENTE FRAZÃO, ELISEU MANUEL, ALCANEDE (PT)
(74) Representative: do Nascimento Gomes, Rui

(57) **Abstract**

The present disclosure refers to the field of pine cone harvesters. Pine harvesters known in the art may take different forms, consisting of hand tools usable by a person or heavier equipment, for instance including a vehicle with the ability to harvest pines from pine trees. Still, they tend to be simple adaptations of the solutions suitable for other applications, particularly those in which a tree is shaken as a whole in order for its fruit or produce to fall down, such as olive harvesters for olive trees. The present disclosure includes a pine cone harvesting implement (10) which rotates gripping means (11) to a rotated position along a tilt axis perpendicular to the gravity vector and/or a pan axis parallel to the gravity vector, and actuates vibrating means to vibrate and, thereby, vibrate the gripping means (11) and the pine tree, when the gripping means (11) are in the rotated position.

## Description

### TECHNICAL FIELD

The present disclosure refers to the field of pine cone harvesters.

### PRIOR ART

Pine harvesters known in the art may take different forms, consisting of hand tools usable by a person or heavier equipment, for instance including a vehicle with the ability to harvest pines from pine trees.

Such heavier equipment may include tools which grip a tree and shake it, causing the pine cones to fall from the tree. These solutions allow the person harvesting pine cones to have a much lower effort.

Still, they tend to be simple adaptations of the solutions suitable for other applications, particularly those in which a tree is shaken as a whole in order for its fruit or produce to fall down, such as olive harvesters for olive trees.

Particularly, pine trees are typically grown in remote areas of irregular soil, contrarily to olive trees, which are grown in levelled fields. Thus, such equipment is not suitable to harvest from such pine trees, since the pine cone harvesting tool is not able to access the main stem of the trees.

In addition, pine cones are in different levels of maturity in a pine tree, and only those more mature easily fall form the tree. The solutions known in the art do not allow to harvest all or the large majority of pine cones in a pine tree without using high intensities of shaking/vibration, which may harm the tree.

The present disclosure provides innovative solutions to found problems.

### SUMMARY OF THE DISCLOSURE

The present disclosure comprises a pine cone harvesting implement. The pine cone harvesting implement may comprise:
gripping means configured to grip a pine tree, the gripping means being further configured to open and close such that, when in the closed position, they grip a pine tree,
vibrating means configured to, when the gripping means are in the closed position, cause the gripping means to vibrate and thereby vibrate a gripped pine tree in at least one frequency and at least one intensity, and
coupling means for detachably coupling the implement to a vehicle such that, upon coupling of the coupling means to a vehicle, the implement is transportable by the vehicle,
wherein the vibrating means are further configured to vibrate according to a pattern, wherein the pattern is defined by a first frequency and/or first intensity during a first period of time and a subsequent at least one second frequency and/or second intensity during a second period of time.

The pine cone harvesting implement may be further configured to:
rotate the gripping means to a rotated position along a tilt axis perpendicular to the gravity vector and/or a pan axis parallel to the gravity vector, and
actuate the vibrating means to vibrate and, thereby, vibrate the gripping means and the pine tree, when the gripping means are in the rotated position.

The present disclosure may further comprise a kit for pine cone harvesting which comprises the pine cone harvesting implement of the present disclosure and powering means, the coupling means of the pine cone harvesting implement comprising a power inlet couplable to power transmission means and a power outlet of the powering means being couplable to the power transmission means.

The present disclosure may further comprise a system for pine cone harvesting comprising a vehicle and the kit of the present disclosure, wherein the power inlet of the coupling means of the pine cone harvesting implement are coupled to power transmission means and the power outlet of the powering means are coupled the power transmission means, the vehicle carrying the pine cone harvesting implement and the powering means.

The present disclosure may further comprise a method for harvesting pine cones from a pine tree comprising gripping the main stem of a pine tree with the pine cone harvesting implement of the present disclosure and causing the vibration means to vibrate.

### DESCRIPTION OF THE FIGURES

Figure 1 - a frontal perspective view of a pine cone harvesting implement (10) according to the present disclosure, highlighting the gripping means (11).
Figure 2 - a rear perspective view of the pine cone harvesting implement (10) of Figure 1, highlighting the coupling means (13).
Figure 3 - a top view of the pine cone harvesting implement (10) of Figures 1 and 2.
Figure 4 - a representation of the rotation of the gripping means (11) in an angle α along the tilt axis, wherein the gripping means (11) are presented from a rear view.
Figure 5 - a representation of the rotation of the gripping means (11) in an angle β along the pan axis, wherein the gripping means (11) are presented from a top view.

### DETAILED DESCRIPTION

The pine cone harvesting implement (10) of the present disclosure comprises
gripping means (11) configured to grip a pine tree, the gripping means (11) being further configured to open and close such that, when in the closed position, they grip a pine tree,
vibrating means configured to, when the gripping means (11) are in the closed position, cause the gripping means (11) to vibrate and thereby vibrate a gripped pine tree in at least one frequency and at least one intensity, and
coupling means (13) for detachably coupling the implement to a vehicle such that, upon coupling of the coupling means (13) to a vehicle, the implement is transportable by the vehicle,
wherein the pine cone harvesting implement (10) is further configured to:
rotate the gripping means (11) to a rotated position along a tilt axis perpendicular to the gravity vector and/or a pan axis parallel to the gravity vector, and
actuate the vibrating means to vibrate and, thereby, vibrate the gripping means (11) and the pine tree, when the gripping means (11) are in the rotated position.

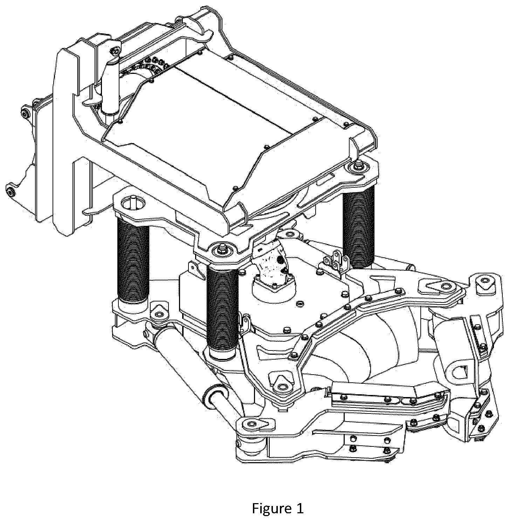

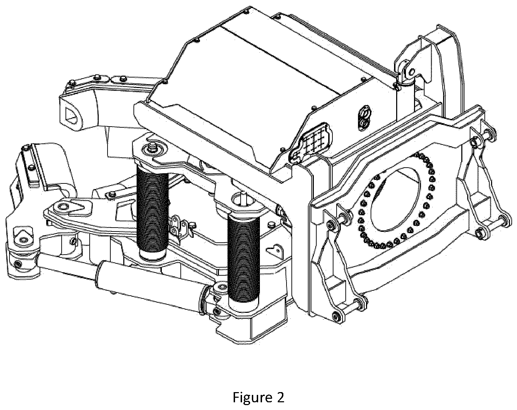

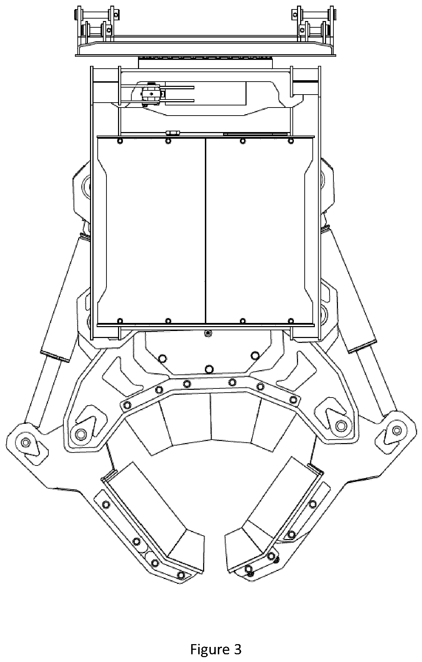

The gripping means (11) are such that grip or embrace a pine tree, particularly a stem of the pine tree, particularly the main stem of the pine tree, an example which is provided in the several views of Figures 1-3.

The vibrating means are configured to transmit vibration to the tree through the gripping means (11), causing pine cones to fall.

The ability to rotate the gripping means (11) and actuate the vibrating means when the gripping means (11) are in a rotated position enables the implement of the present disclosure to operate in sloped conditions or with crooked stem trees.

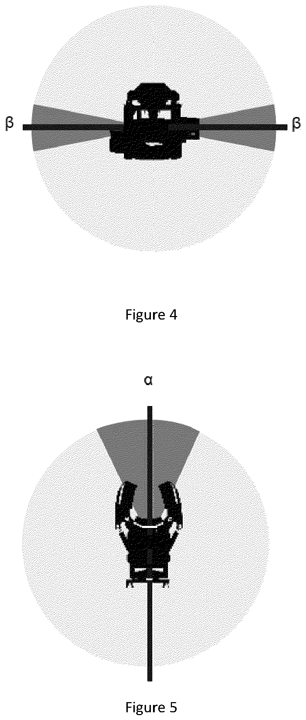

The pine cone harvesting implement (10) may be configured such that the gripping means (11) are rotatable along tilt axis up to an angle α - as represented in figure 5 - of 45°, optionally up to 40°, optionally up to 35°, optionally up to 30°, optionally up to 25°, optionally up to 20°, optionally up to 22°.

The pine cone harvesting implement (10) may be configured such that the gripping means (11) are rotatable along the pan axis up to an angle β - as represented in figure 4 - of 75°, optionally up to 70°, optionally up to 65°, optionally up to 60°, optionally up to 55°, optionally up to 50°, optionally up to 45°.

The gripping means (11) may be configured to grip a pine tree at a section of the stem having a diameter of 150 to 1000 mm, optionally 220 to 900.

The vibrating means may be further configured to adapt the frequency and/or intensity according to at least one parameter of the pine tree. The parameter may be the type of pine cones, the size of the tree, the diameter of the main stem, the age of the tree or the species of the tree.

The vibrating means may be further configured to vibrate according to a pattern, wherein the pattern is defined by a first frequency and/or first intensity during a first period of time and a subsequent at least one second frequency and/or second intensity during a second period of time.

The passage from a frequency and/or intensity to another frequency and/or intensity may be continuous.

The passage from a frequency and/or intensity to another frequency and/or intensity may be discontinuous. The vibration may thus stop prior to the vibration means vibrating at a second frequency and/or intensity.

The pine cone harvesting implement (10) may comprise:
gripping means (11) configured to grip a pine tree, the gripping means (11) being further configured to open and close such that, when in the closed position, they embrace a pine tree,
vibrating means configured to, when the gripping means (11) are in the closed position, cause the gripping means (11) to vibrate and thereby vibrate a gripped pine tree in at least one frequency and at least one intensity, and
coupling means (13) for detachably coupling the implement to a vehicle such that, upon coupling of the coupling means (13) to a vehicle, the implement is transportable by the vehicle,
wherein the vibrating means are further configured to vibrate according to a pattern, wherein the pattern is defined by a first frequency and/or first intensity during a first period of time and a subsequent at least one second frequency and/or second intensity during a second period of time.

The implement of the present disclosure, by changing the parameters of vibration, allows to better harvest pine cones, as the branches of the containing pine cones or the pine cones are detached from the pine tree in an enhanced manner. Through the changing of parameters of vibration, force is transmitted to the branches and pine cones in an enhanced manner.

The vibrating means may be further configured to adapt the frequency and/or intensity according to at least one parameter of the pine tree.

The parameter may be the type of pine cones, the size of the tree, the diameter of the main stem, the age of the tree or the species of the tree. The implement of the present disclosure is thus adaptable to different conditions, particularly enabling that a single device harvests different pine cones, or pine cones in different conditions, in an enhanced manner.

The passage from a frequency and/or intensity to another frequency and/or intensity may be continuous.

The passage from a frequency and/or intensity to another frequency and/or intensity may be discontinuous.

The pine cone harvesting implement (10) may be further configured to:
rotate the gripping means (11) to a rotated position along a tilt axis perpendicular to the gravity vector and/or a pan axis parallel to the gravity vector, and
actuate the vibrating means to vibrate and, thereby, vibrate the gripping means (11) and the pine tree, when the gripping means (11) are in the rotated position.

The pine cone harvesting implement (10) may be configured such that the gripping means (11) are rotatable along tilt axis up to an angle α of 45°, optionally up to 40°, optionally up to 35°, optionally up to 30°, optionally up to 25°, optionally up to 20°, optionally up to 22°.

The pine cone harvesting implement (10) may be configured such that the gripping means (11) are rotatable along the pan axis up to an angle β of 75°, optionally up to 70°, optionally up to 65°, optionally up to 60°, optionally up to 55°, optionally up to 50°, optionally up to 45°.

The gripping means (11) may be configured to grip a pine tree at a section of the stem having a diameter of 150 to 1000 mm, optionally 220 to 900.

The vibrating means may be further configured to adapt the frequency and/or intensity according to at least one parameter of the pine tree.

In any of the embodiments of the pine cone harvesting implement (10) of the present disclosure, the gripping means (11) are controllable by a gripping controller. The gripping controller comprises a programmable microcontroller. The gripping controller controls the operation of the gripping means (11), opening and closing the gripping means (11).

The gripping means (11) may consist of claws which grip/embrace the main stem of a tree.

The gripping controller may control the operation of the powering means while powering the gripping means (11), in order to control the operation of the gripping means (11).

In any of the embodiments of the pine cone harvesting implement (10) of the present disclosure, the vibration means are controllable by a vibration controller. The vibration controller comprises a programmable microcontroller. The vibration controller controls the operation of the vibration means, defining the vibration frequency and/or intensity with which the vibration means vibrate and cause the gripping means (11) to vibrate.

In addition, the vibration controller may also adapt the vibration frequency and/or intensity based on a parameter of the tree.

In addition, the vibration controller may also cause the vibration means to vibrate according to a pattern, wherein the pattern is defined by a first frequency and/or first intensity during a first period of time and a subsequent at least one second frequency and/or second intensity during a second period of time.

The present disclosure may comprise a kit for pine cone harvesting in turn comprising the pine cone harvesting implement (10) of any of the preceding claims and powering means, the coupling means (13) of the pine cone harvesting implement (10) comprising a power inlet couplable to power transmission means and a power outlet of the powering means being couplable to the power transmission means.

The powering means may comprise a power inlet and a cardan coupled to the power inlet, the power inlet being couplable toa power take off of a vehicle, the power of the power outlet of the powering means being obtained from the power inlet and the respective cardan, thereby providing torque from the powering means to the gripping means (11) of the pine cone harvesting implement (10).

The powering means may comprise power conversion means, the power conversion means converting mechanical energy obtained from the power take off to a second energy means.

The second energy means may be hydraulic energy, the gripping means (11) thereby being hydraulically powered and the power transmission means comprising hydraulic tubing.

The present disclosure may further comprise a system for pine cone harvesting comprising a vehicle and the kit of the present disclosure, wherein the power inlet of the coupling means (13) of the pine cone harvesting implement (10) are coupled to power transmission means and the power outlet of the powering means are coupled to the power transmission means, the vehicle carrying the pine cone harvesting implement (10) and the powering means.

The power inlet of the powering means is coupled to a power take off of the vehicle, thereby providing traction from the powering means to the pine cone harvesting implement (10) through the power transmission means.

The present disclosure further comprises a method for harvesting pine cones from a pine tree comprising gripping the main stem of a pine tree with the pine cone harvesting implement (10) of the present disclosure and causing the vibration means to vibrate.

The method may further comprise rotating the gripping means (11) of the pine cone harvesting implement (10) and causing the vibration means to vibrate.

The method may further comprise causing the vibration means to vibrate at a first frequency and/or first intensity for a first period of time and subsequently cause the vibration means to vibrate at a second frequency and/or second intensity for a second period of time.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A pine cone harvesting implement (10) comprising:
gripping means (11) configured to grip a pine tree, the gripping means (11) being further configured to open and close such that, when in the closed position, they grip a pine tree,
vibrating means configured to, when the gripping means (11) are in the closed position, cause the gripping means (11) to vibrate and thereby vibrate a gripped pine tree in at least one frequency and at least one intensity, and
coupling means (13) for detachably coupling the implement to a vehicle such that, upon coupling of the coupling means (13) to a vehicle, the implement is transportable by the vehicle,
wherein the vibrating means are further configured to vibrate according to a pattern, wherein the pattern is defined by a first frequency and/or first intensity during a first period of time and a subsequent at least one second frequency and/or second intensity during a second period of time.

2. A pine cone harvesting implement (10) according to the previous claim wherein the vibrating means are further configured to adapt the frequency and/or intensity according to at least one parameter of the pine tree.

3. A pine cone harvesting implement (10) according to any of the preceding claims wherein the passage from a frequency and/or intensity to another frequency and/or intensity is continuous.

4. A pine cone harvesting implement (10) according any of the preceding claims wherein the passage from a frequency and/or intensity to another frequency and/or intensity is discontinuous.

5. A pine cone harvesting implement (10) according to any of the preceding claims wherein the pine cone harvesting implement (10) is further configured to:
rotate the gripping means (11) to a rotated position along a tilt axis perpendicular to the gravity vector and/or a pan axis parallel to the gravity vector, and
actuate the vibrating means to vibrate and, thereby, vibrate the gripping means (11) and the pine tree, when the gripping means (11) are in the rotated position.

6. A pine cone harvesting implement (10) according to the previous claim wherein it is configured such that the gripping means (11) are rotatable along tilt axis up to 45°, optionally up to 40°, optionally up to 35°, optionally up to 30°, optionally up to 25°, optionally up to 20°, optionally up to 22°.

7. A pine cone harvesting implement (10) according to any of the preceding claims wherein it is configured such that the gripping means (11) are rotatable along the pan axis up to 75°, optionally up to 70°, optionally up to 65°, optionally up to 60°, optionally up to 55°, optionally up to 50°, optionally up to 45°.

8. A pine cone harvesting implement (10) according to any of the preceding claims wherein the gripping means (11) are configured to grip a pine tree at a section of the stem having a diameter of 150 to 1000 mm, optionally 220 to 900.

9. A pine cone harvesting implement (10) according to any of the claims preceding wherein the vibrating means are further configured to adapt the frequency and/or intensity according to at least one parameter of the pine tree.

10. A kit for pine cone harvesting comprising the pine cone harvesting implement (10) of any of the preceding claims and powering means, the coupling means (13) of the pine cone harvesting implement (10) comprising a power inlet couplable to power transmission means and a power outlet of the powering means being couplable to the power transmission means.

11. A kit according to the previous claim wherein the powering means comprise a power inlet and a cardan coupled to the power inlet, the power inlet being couplable to a power take off of a vehicle, the power of the power outlet of the powering means being obtained from the power inlet and the respective cardan, thereby providing torque from the powering means to the gripping means (11) of the pine cone harvesting implement (10).

12. A kit according to the previous claim wherein the powering means comprise power conversion means, the power conversion means converting mechanical energy obtained from the power take off to a second energy means.

13. A kit according to the previous claim wherein the second energy means is hydraulic energy, the gripping means (11) thereby being hydraulically powered, and the power transmission means comprising hydraulic tubing.

14. A system for pine cone harvesting comprising a vehicle and the kit of any of claim 10, wherein the power inlet of the coupling means (13) of the pine cone harvesting implement (10) are coupled to a power transmission means and the power outlet of the powering means are coupled to the power transmission means, the vehicle carrying the pine cone harvesting implement (10) and the powering means,
optionally the kit being according to any of the claims 19-21, wherein the power inlet of the powering means is coupled to a power take off of the vehicle, thereby providing traction from the powering means to the pine cone harvesting implement (10) through the power transmission means

15. A method for harvesting pine cones from a pine tree comprising gripping the main stem of a pine tree with the pine cone harvesting implement (10) of any of the claims 1-9 and causing the vibration means to vibrate wherein, optionally
the pine cone harvesting implement (10) is according to any of the claims 1-9, the method further comprising causing the vibration means to vibrate at a first frequency and/or first intensity for a first period of time and subsequently cause the vibration means to vibrate at least a second frequency and/or second intensity for a second period of time.
